# EUROPEAN PATENT APPLICATION

(11) **EP 4 528 613 A1**
(43) Date of publication of application: **26.03.2025**
(21) Application number: 23198768.6
(22) Date of filing: 21.09.2023
(51) Int. Cl.: G06Q 10/10

(54) **COMPUTER-IMPLEMENTED METHOD AND SYSTEM FOR PROCESSING A SERVICE WITH SOVEREIGN DATA**

(71) Applicant: Siemens Aktiengesellschaft, 80333 München (DE)
(72) Inventor: Karagiannis, Vasileios, 1070 Wien (AT); Batsiukov, Kiryl, 81379 München (DE); Coman, Andrei Laurentiu, 500256 Brasov (RO); Tintoiu, Anca Mihaela, 117630 Rucar (RO); Zahorcak, Vladimir, 900 32 Borinka (SK)
(74) Representative: Siemens Patent Attorneys

(57) **Abstract**

Computer-implemented method for processing a service that acquires sovereign datasets and operating a technical device with the dataset obtained thereby, wherein following steps are executed:
I. Processing contracts:
• retrieving references to the datasets and to a respective data provider (DP1-DP3) from a registry (REG) using predefined criteria, and
• retrieving contracts from the respective data providers (DP1-DP3) using the references to the dataset and to the respective data provider, and
• consolidating the contracts as a super-contract (SC), referring to the contracts,

II. signing the super-contract by the data consumer,
III. retrieving the datasets by downloading from the respective data provider (DP1-DP3) after approving the signature of the super-contract (SC),
IV. processing the service using the provided datasets as the sovereign datasets by a processing device and operate the connected technical device with the data obtained by the processed service.

## Description

*Independent of the grammatical term usage, individuals with male, female or other gender identities are included within the term.*

The invention relates to a computer-implemented method and a system for processing a service that acquires sovereign datasets and operating a technical device with the datasets obtained thereby.

The invention relates further to a computer-program-product and an electronic storage medium.

Initiatives such as Gaia-X, Catena-X and IDSA (International Data Spaces Association) describe applications, which require digital sovereignty of used data to provide data protection and reliability and trust on processed data to users of the applications.

Within the context of digital sovereignty, there have been efforts to provide architectures and mechanisms for creating and sharing sovereign datasets.

The existing documentation on this topic however describes a highly inefficient negotiation of sovereign datasets whereby human inspection is required for each sovereign data exchange.

Since human inspection for every dataset can cause significant time delays, this invention reduces the human factor while maintaining the principles of digital sovereignty.

Prior art describes how a data consumer can sign a contract and acquire the corresponding dataset from a data provider. However, there is no prior art regarding signing multiple contracts, and acquiring multiple sovereign datasets automatically.

This means that if a data consumer wants to gather all the available sovereign datasets that meet certain criteria, e.g., all the datasets which include manufacturing information from shop floors, and there are 1,000 such datasets registered, then the data consumer will have to negotiate and sign one-by-one 1,000 contracts, one for each dataset.

Considering that each contract may need human inspection and approval, it may be infeasible to inspect all contracts and request all datasets in reasonable time.

Examples of prior art related to acquiring one dataset at a time is the publication of Braud, A., Fromentoux, G., Radier, B. and Le Grand, O., 2021, "The Road to European Digital Sovereignty with Gaia-X and IDSA", IEEE Network, 35(2), pp.4-5, that presents the efforts of Gaia-X and IDSA to define an architecture which enables a data consumer to sign a contract and acquire a sovereign dataset.

One more relevant publication is the white paper "The IDS Reference Architecture Model", in which a reference architecture is described, that can be used for creating a system for exchanging sovereign datasets. Currently, this architecture represents the state-of-the-art of sovereign data exchange.

Therefore, the objective of the invention is to provide a method and a system to overcome said disadvantages in prior art.

The objective of the invention is solved by executing following steps:
I. Processing contracts:
   - retrieving references to the datasets and to respective data providers from a registry using predefined criteria, and
   - retrieving contracts from the respective data providers using the references to the dataset and to the respective data provider, and
   - consolidating the contracts as a super-contract, referring to the contracts,
II. signing the super-contract by the data consumer,
III. retrieving the datasets by downloading from the respective data provider after approving the signature of the super-contract,
IV. processing the service using the provided datasets as the sovereign datasets by a processing device and operate the connected technical device with the data obtained by the processed service.

Every dataset has a contract, and every contract has a set of individual contractual terms. A super-contract has grouped datasets by individual contractual terms.

Contracts can comprise technical specifications, e.g., defining data and information regarding its data structure, data size, data transmission.

Contractual terms can be for instance minimal and/or maximal technical parameter ranges of the technical specifications.

The consolidation of individual contracts to a super-contract is performed by grouping the datasets according to same contractual terms, i.e., the respective specifications.

In the context of the present invention, generally, the contracts or the super-contract relate to the technical aspects of a provided technical service, like a storage service, a processing service, a data transmission service, an operating and/or a maintenance service of a technical device, etc.

In the context of the present invention, generally, datasets can be also represented by elements of individual contracts, i.e., the respective terms or specifications, in other words predefined technical parameter and/or predefined technical parameter ranges.

This invention describes the operation of an additional software component that can be incorporated within a system that follows a standard architecture for sovereign data exchange (e.g., the reference architecture provided in IDSA or Gaia-X documentation).

Using this component, a data consumer can approve multiple contracts automatically, thus being able to acquire many sovereign datasets -without inspecting and signing one contract at a time.

Notably, this invention can find use in any sovereign data exchange system such as the project "Catena-X Automotive Network" and targets use cases related to supply chain traceability and quality control, among others.

The difference between the system described by this invention and existing systems for sovereign data exchange, is the additional component - referred to as the contract proxy - which enables a data consumer to acquire multiple sovereign datasets with less or no human inspection.

The invention allows to sign contracts automatically using a super-contract.

Since signing a contract for sovereign data exchange may require human inspection and approval, it may not be feasible to acquire many datasets in reasonable time (because human inspection can become a bottleneck, e.g., for inspecting thousands of contracts). This invention transforms a large number of contracts into a structure that is more manageable for human inspection, i.e., the super-contract.

After signing the super-contract, the contract proxy signs multiple contracts automatically, i.e., without human inspection, making it possible to acquire multiple sovereign datasets at once.

Moreover, the invention allows a simple implementation of such a contract proxy into an existing system.

The proposed contract proxy is designed to be a component that can work as an additional application which provides an important feature, i.e., getting multiple sovereign datasets, without relying on any adaptation in existing components of an architecture for sovereign data exchange.

This means that integrating this invention into existing systems for sovereign data exchange can be achieved without significant effort.

The invention can be further developed by executing following steps:
a) Request dataset using predefined criteria from a contract proxy device by a data consumer device,
b) Request dataset and provider data from a registry by the contract proxy device, and query the dataset and the provider data in a database of the registry using the predefined criteria,
c) Provide a reference to the dataset and to the provider data from the registry to the contract proxy device,
d) Query contracts in a database of the respective at least one data provider using the reference to the dataset and to the provider data,
e) Provide the contracts from the at least one data provider to the contract proxy device,
f) Consolidate the contracts as a super-contract, referring to the contracts, by the contract proxy device,
g) Provide the super-contract from the contract proxy device to the data consumer device,
h) Request to sign the super-contract from the contract proxy device and sign by the data consumer device,
i) Sign the contracts from the respective at least one data provider by the contract proxy device,
j) Provide download links regarding the respective datasets as download links, from the at least one data provider to the contract proxy device,
k) Provide links regarding the download links from the contract proxy device to the data consumer device,
l) Request the dataset download using the download links from the at least one data provider by the data consumer device,
m) Provide the requested dataset using the download links,
n) Process the service using the datasets provided in step m) as the sovereign datasets by a processing device and operate a connected technical device with the data obtained by the processed service.

The provided steps a-n can replace the steps I-IV presented before since they provide more details for the same method.

The provided steps a-n specify and limit these steps presented before additionally and provide the same technical effect as described before.

The invention can be further developed if the contract is a set of contracts, comprising at least two contracts.

In such a case the establishment of the super-contract is more efficient.

The invention can be further developed if the consolidated contracts as a super-contract, referring to the contracts, is performed by grouping contracts with same contract details.

This allows to use the super-contract for a simplified signing procedure.

The objective of the invention is solved also by a system for processing a service that acquires multiple sovereign datasets and operating a technical device with the datasets obtained thereby, comprising a consumer device, a contract proxy device, at least one data provider and a registry, wherein the steps of the method according to one of the preceding method claims is executed.

The invention can be further developed if the contract proxy device comprises a registry explorer module, a contract aggregator module, a contract consolidator module, a contract negotiator module and a download link dispatcher module, wherein following steps are executed:
S1) the registry explorer module is configured to search the registry using predefined search criteria and to retrieve data related to a respective data provider and related to a respective dataset, and
S2) the contract aggregator module is configured to contact a data provider and to aggregate contracts by grouping contracts according to their contractual terms, like terms of contracts, and
S3) the contract consolidator module is configured to consolidate/to merge contracts to a super-contract, and
S4) the contract negotiator module is configured to approve the super-contract with the data consumer, and
S5) the download link dispatcher module is configured to create a list of download links regarding datasets.

Consequently, a prior art system can be easily adopted to implement the simple and efficient procedure for signing contracts as described before.

The contract negotiator module consolidates, i.e., merges contracts to a super-contract. This can be implemented by sorting several contracts, including datasets and terms of contract. The super-contract groups all entities, i.e., datasets, according to their terms of contract to allow a simplification at the point of signing the contracts in one step.

In the context of the present invention, generally, the aggregation of contracts by grouping contracts according to their contractual terms can be performed for instance by grouping contracts with similar contract details, whereas the similarity can be defined by identical parameters with overlapping parameter ranges or parameter deviations of less than 30%, preferably less than 20% or more preferably less than 10% of the respective parameter value.

The objective of the invention is solved also by a computer program product, comprising instructions which, when the program is executed by a computer, cause it to carry out the method/steps of the method according to invention.

The objective of the invention is solved also by a storage medium, in particular for computer data, comprising the computer program product according to the invention.

The invention is explained in more detail below with reference to an exemplary embodiment illustrated in the enclosed drawings. In the drawings shows:
- Fig. 1: an embodiment with a block/component diagram of a system for processing data,
- Fig. 2: an embodiment with a block/component diagram of a system for processing data with a contract proxy according to the invention,
- Fig. 3: an embodiment of consolidated data of the datasets used within method executed at the contract proxy,
- Fig. 4: an embodiment with a schematic sequence diagram of the method.

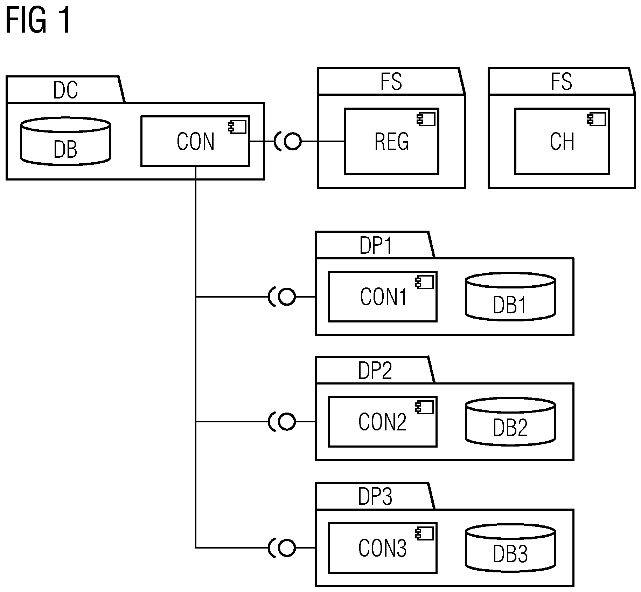

**Fig. 1** shows an embodiment with a block diagram of the internal architecture and functionality of a system that mediates between a user and multiple data providers with data bases.

A typical system whereby a data consumer DC can acquire multiple sovereign datasets is depicted in Fig. 1

Such a system includes several modules:
Federated services FS: This represents components that are part of an infrastructure for sovereign data exchange, and are maintained by the infrastructure provider (e.g., the International Data Spaces Association, short "IDSA", or any other organization).

Two necessary federated services FS are:
- Registry REG: Acts as a central point for data providers that want to submit the metadata (e.g., origin, content description, properties) of the datasets to be shared. Also, the registry REG is a central point for data consumers DC that want to search for datasets DS with specific criteria (e.g., based on origin, content description, properties).
- Clearing house CH: Logs all transactions that occur in the system (e.g., interactions between data providers and data consumers). The data in the clearing house are immutable and can be used for resolving conflicts (e.g., a data consumer claims that they have not received agreed dataset by the data provider).

Data Consumer DC: This is an entity (individual or organization) that can search for datasets in the registry and may request to acquire access to a specific dataset from the dataset's data provider. Multiple data consumers may exist at the same time.

Two necessary components of the data consumer DC are:
- Connector CON: This is a software component that can be used for requesting/exposing sovereign datasets.
- Database DB: This represents the memory storage that can be used by the connector to store the requested dataset after acquiring it.

Data provider DP1-DP3: This is an entity (individual or organization) that submits the metadata of datasets in the registry and is responsible for exposing this dataset to a data consumer upon agreement. Multiple data providers may exist at the same time.

Two necessary components of each respective of the data providers DP1-DP3 are:
- Connector CON1-CON3: This is a software component that handles the communication with the connector of the data consumer. Essentially, the connector of the data consumer requests a dataset from the connector of the data provider, and the data provider connector is responsible for providing access to the requested dataset.
- Database DB1-DB3: This represents the memory storage that hosts the dataset of the data provider.

In case a data consumer DC aims at acquiring multiple datasets, e.g., the data consumer needs to get all the available datasets that meet certain criteria (such as all the datasets which include traceability of supply chains for the automotive industry), the following interactions can take place, i.e., the steps Ix can be executed:
I1. The data consumer DC performs a query to the registry REG using specific search criteria, and the registry REG responds with the identifiers, IDs, of the data providers DP1-DP3 that have related datasets along with the IDs of these datasets. Even though only three data providers DP1-DP3 are depicted in Fig. 1, more data providers may exist at the same time, which behave in a similar manner.
I2. The data consumer DC contacts each data provider DP1-DP3 individually and requests the relevant dataset. Each data provider DP1-DP3 responds with a respective contract that includes the terms of use of the corresponding dataset.
I3. The data consumer DC then negotiates every contract, i.e., inspects each contract individually, and as long as there are no objections to the terms of use included in each contract, the data consumer signs the contracts and sends them back to their corresponding data provider.
I4. Each data provider DP1-DP3 receives the signed contract and provides the data consumer with access to the dataset, e.g., using a download link DL for downloading the agreed dataset.
I5. The data consumer DC acquires the datasets using the download links DL.

Notably, step I3 can necessitate human intervention since each data provider's contract needs to be inspected and approved. For this reason, this step can easily become a bottleneck which may make it infeasible for a data consumer to acquire multiple datasets in reasonable time, especially in cases when the data consumer wants to aggregate large numbers of datasets.

To cope with this problem, this invention proposes an additional component, namely the contract proxy CP.

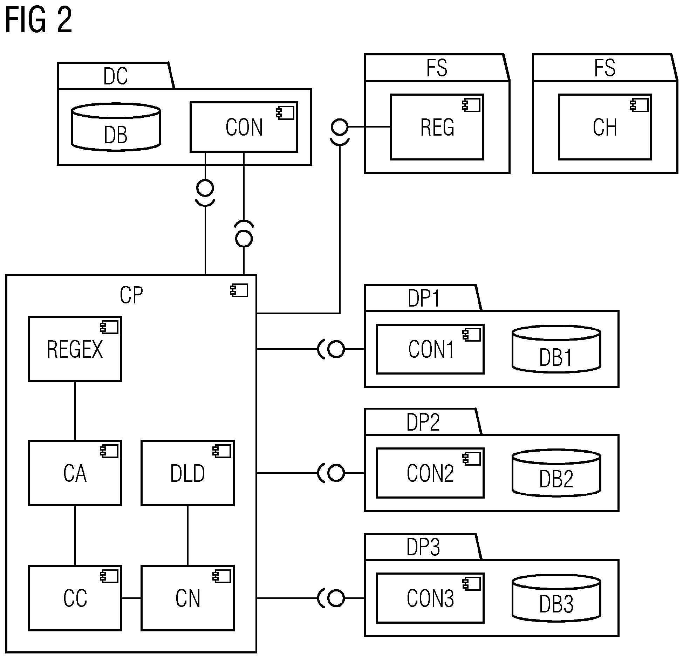

**Fig. 2** explains an embodiment with a block/component diagram of a system for processing data with a contract proxy CP according to the invention, on which the method can be executed.

The contract proxy CP is intended to operate as a federated service FS (similar to the registry REG or the clearing house CH) but can also operate as part of the data consumer DC or as an independent application in the system.

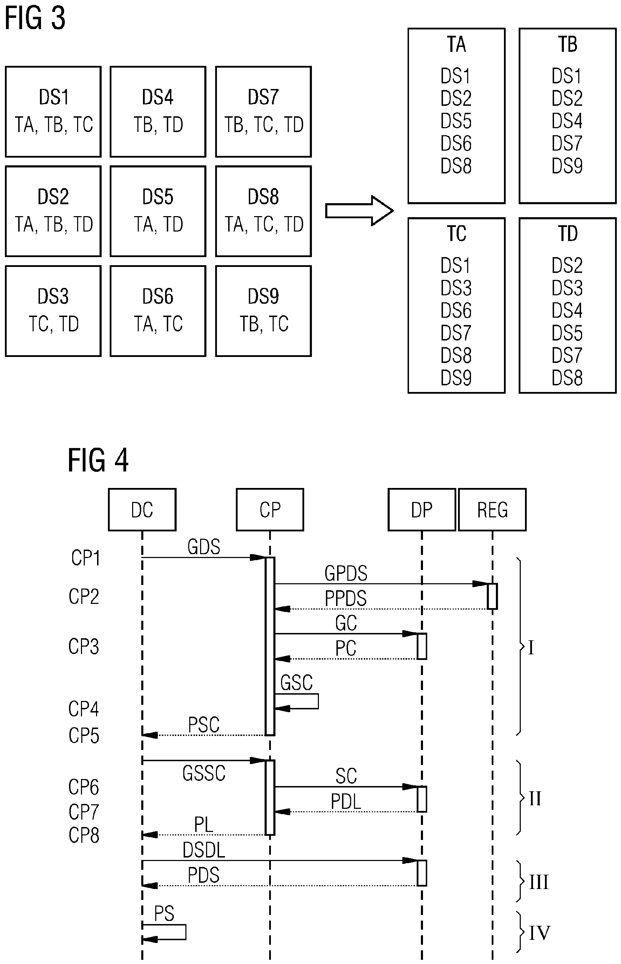

The contract proxy CP behaves as follows, i.e., the steps CPx can be executed:
CP1. Receives a query for datasets GDS from the data consumer DC.
CP2. Searches for related datasets in the registry REG.
CP3. Contacts all the relevant data providers DP1-DP3 and gathers all the contracts.
CP4. Consolidates all the contracts into a super-contract SC which includes the terms of use of all the datasets. Notably, each contract refers to one dataset and contains a list with terms of use. For the inspection of all the contracts, the time complexity depends on the number of contracts and the number of terms of each contract. The structure of the super-contract SC is different in that it contains a list with terms of use, and for each one of these terms, it includes the corresponding datasets. Subsequent Fig. 3 shows an example for the consolidation of data into the super-contract SC.
CP5. Sends the super-contract SC to the data consumer. There, the super-contract SC is inspected and signed. The human (responsible of the approval) can also decide in advance on a list of preapproved terms of use. If this is done, these terms can be approved automatically (i.e., without human inspection) which leads to a smaller number of terms of use that need to be inspected and approved manually and less delay.
   Notably, if all the terms of use of the super-contract SC are already preapproved, the super-contract SC can be signed automatically - without any delay for human inspection.
CP6. After the super-contract SC is signed, the contract proxy CP signs the contract of each data provider DP1-DP3 -automatically- because the human inspection has already taken place by the data consumer on the super-contract SC which includes a superset of the terms of use of each individual contract.
CP7. Acquires access to the datasets, e.g., using download links. Compiles all the download links into a list.
CP8. Sends the list of download links to the data consumer DC. There, the datasets are downloaded by the data consumer DC.

Contrarily to the typical case in Fig. 1, the data consumer DC in Fig. 2 does not interact directly with the registry REG or the data providers DP1-DP3.

Instead, the contract proxy CP now handles all the communication with the registry REG and the data providers DP1-DP3.

The contract proxy CP includes the following modules, i.e. system components:
- Registry explorer REGEX: Searches the registry REG and retrieves the data provider IDs and the dataset IDs of all the datasets that meet the search criteria defined by the data consumer. This information is then sent to the contract aggregator CA.
- Contract aggregator CA: Contacts the data providers DP1-DP3 and aggregates all the contracts of the datasets that meet the search criteria of the data consumer DC. These contracts are then sent to the contract consolidator CC.
- Contract consolidator CC: Consolidates the contracts of the data providers DP1-DP3 into the super-contract SC. The super-contract SC groups the datasets by term of use, i.e., for each term of use mentioned in any of the individual contracts, all the relevant datasets are listed, as shown in the example of Fig. 3. The super-contract SC is then sent to contract negotiator CN.
- Contract negotiator CN: First, the contract negotiator CN sends the super-contract SC to the data consumer DC. As soon as the data consumer DC agrees to the terms of use of the super-contract SC, the contract negotiator CN contacts each data provider DP1-DP3 and signs each provider's contract automatically, i.e., without human inspection. Then, the contract negotiator acquires access to the datasets, e.g., using download links DL.
- Download Link Dispatcher DLD: Creates a list with all the download links DL of the datasets and sends this list to the data consumer DC.

In other words, the system according to the invention comprising a consumer device DC, a contract proxy device CP, at least one data provider DP1-DP3 and a registry REG.

The contract proxy device CP comprises a registry explorer module REGEX, a contract aggregator module CA, a contract consolidator module CC, a contract negotiator module CN and a download link dispatcher module DLD.

Following steps are executed:
S1) the registry explorer module REGEX is configured to search the registry REG using predefined search criteria and to retrieve data related to a respective data provider and related to a respective dataset, and
S2) the contract aggregator module CA is configured to contact a data provider and to aggregate contracts by grouping contracts according to their contractual terms, like terms of contracts, and
S3) the contract consolidator module CC is configured to consolidate/to merge contracts to a super-contract SC, and
S4) the contract negotiator module CN is configured to approve the super-contract SC with the data consumer DC, and
S5) the download link dispatcher module DLD is configured to create a list of download links DL regarding datasets.

**Fig. 3** shows an embodiment of rearranged data of the datasets used within method executed at the contract proxy CP.

On the left, individual contracts with datasets DS1-DS9 are shown, each having individual terms of contract TA-TD.

On the right, a super-contract SC is shown, the datasets DS1-DS9 are grouped internally according to different terms of contract TA-TD.

Again, the structure of the super-contract SC is different in that it contains a list with terms a, b, c, d of use, and for each one of these terms TA-TD, it includes the corresponding datasets DS1-DS9.

Note that in this example, nine contracts are consolidated into one super-contract SC.

Since the dataset ID may not be important for the approval of the terms of use TA-TD during the human inspection, the time complexity to inspect the super-contract depends only on the number of terms of use.

Considering also that many datasets can have identical terms of use the time complexity for human inspection using the super-contract SC can be significantly lower than when using the individual contracts.

For instance, to sign the individual contracts of Fig. 3, one needs to inspect nine contracts with 2-3 terms each.

Whereas, to sign the super-contract SC of Fig. 3, one needs to inspect only four terms of use.

Similarly, to agree with the terms of use of thousands of contracts, inspecting the super-contract can be much more manageable for human approval than inspecting each contract individually.

Moreover, since all the datasets are the output of a single query GDS to the registry REG, it is likely that these datasets are similar and share many identical terms of use.

Having many identical terms of use results in a smaller super-contract SC which requires less time for human inspection.

Furthermore, since there are existing solutions for formulating and modeling terms of use programmatically (such as the Open Digital Rights Language), converting the individual contracts into the super-contract SC can be done without significant effort which makes this invention easier to realize.

**Fig. 4** shows an embodiment with a schematic sequence diagram of the method.

First the data consumer DC sends a query based on specific criteria to the contract proxy CP.

The contract proxy CP gets the data provider IDs and the dataset IDs from the registry REG and requests the datasets' contracts.

After getting the contracts, the contract proxy creates the super-contract SC, and sends it to the data consumer DC.

The data consumer DC signs the super-contract SC.

Then, the contract proxy CP signs all the individual contracts automatically and acquires the download links DL of the datasets.

The download links DL are then sent to the data consumer DC that is now able to download the datasets.

The sequence diagram can be also described by following steps a-n:
a) Request dataset GDA using predefined criteria from a contract proxy device CP by a data consumer device DC,
b) Request dataset GPDS and provider data from a registry REG by the contract proxy device CP, and query the dataset and the provider data in a database of the registry REG using the predefined criteria,
c) Provide a reference to the dataset and to the provider data PPDS from the registry REG to the contract proxy device CP,
d) Query contracts GC in a database of the respective at least one data provider DP1-DP3 using the reference to the dataset and to the provider data PPDS,
e) Provide the contracts PC from the at least one data provider DP1-DP3 to the contract proxy device CP,
f) Consolidate the contracts as a super-contract SC, referring to the contracts, by the contract proxy device CP,
g) Provide the super-contract PSC from the contract proxy device CP to the data consumer device DC,
h) Request to sign GSSC the super-contract SC from the contract proxy device CP and sign by the data consumer device DC,
i) Sign SC the contracts by the respective at least one data provider DP1-DP3, by the contract proxy device CP,
j) Provide download links PDL regarding the datasets as download links DL, from the at least one data provider DP1-DP3 to the contract proxy device CP,
k) Provide links PL regarding the download links DL from the contract proxy device CP to the data consumer device DC,
l) Request the dataset download DSDL using the download links DL from the at least one data provider DP1-DP3 by the data consumer device DC,
m) Provide the requested dataset using the download DL,
n) Process the service PS using the dataset provided in step m) as the sovereign dataset by a processing device and operate a connected technical device with the data obtained by the processed service.

The presented method can be executed on a system including a contract proxy device CP according to Fig. 2.

The processing device, which operates the technical device, is included by the data consumer device DC in this example, but alternatively, can be also an external device, communicatively connected, and receiving respective data from the data consumer DC.

### List of reference numerals:

- CA: contract aggregator
- CC: contract consolidator
- CH: clearing house
- CN: contract negotiator
- CON, CON1-CON3: connector
- CP: contract proxy
- DB, DB1-DB3: data base
- DC: data consumer
- DL: download links
- DLD: download link dispatcher
- DP: data provider
- DS1-DS9: dataset
- DSDL: dataset download
- FS: federated service
- GC: get contracts
- GDS: get datasets
- GPDS: get provider and datasets
- GSC: generate super-contract, consolidated contracts
- GSSC: get signed super-contract
- PC: provide contracts
- PDL: provide download links
- PDS: provide datasets
- PL: provide links
- PPDS: provide provider and datasets
- PS: process service
- PSC: provide super-contract
- REG: registry
- REGEX: registry explorer
- SC: sign contracts
- TA-TD: terms of datasets

## Claims

1. Computer-implemented method for processing a service that acquires multiple sovereign datasets and operating a technical device with the datasets obtained thereby, wherein following steps are executed:
I. Processing contracts:
• retrieving references to the datasets and to respective data providers (DP1-DP3) from a registry (REG) using predefined criteria, and
• retrieving contracts from the respective data providers (DP1-DP3) using the references to the datasets and to the respective data providers, and
• consolidating the contracts as a super-contract (SC), referring to the contracts,
II. signing the super-contract by the data consumer (DC),
III. retrieving the datasets by downloading from the respective data providers (DP1-DP3) after approving the signature of the super-contract (SC),
IV. processing the service using the provided datasets as the sovereign datasets by a processing device and operate the connected technical device with the data obtained by the processed service.

2. Method according to the previous claim, wherein following steps are executed:
a) Request dataset (GDA) using predefined criteria from a contract proxy device (CP) by a data consumer device (DC),
b) Request dataset (GPDS) and provider data from a registry (REG) by the contract proxy device (CP), and query the dataset and the provider data in a database of the registry (REG) using the predefined criteria,
c) Provide a reference to the dataset and to the provider data (PPDS) from the registry (REG) to the contract proxy device (CP),
d) Query contracts (GC) in a database of the respective at least one data provider (DP1-DP3) using the reference to the dataset and to the provider data (PPDS),
e) Provide the contracts (PC) from the at least one data provider (DP1-DP3) to the contract proxy device (CP),
f) Consolidate the contracts as a super-contract (SC), referring to the contracts, by the contract proxy device (CP),
g) Provide the super-contract (PSC) from the contract proxy device (CP) to the data consumer device (DC),
h) Request to sign (GSSC) the super-contract (SC) from the contract proxy device (CP) and sign by the data consumer device (DC),
i) Sign (SC) the contracts by the respective at least one data provider (DP1-DP3) from the at least one data provider (DP1-DP3), by the contract proxy device (CP),
j) Provide download links (PDL) regarding the datasets as download links (DL), from the at least one data provider (DP1-DP3) to the contract proxy device (CP),
k) Provide links (PL) regarding the download links (DL) from the contract proxy device (CP) to the data consumer device (DC),
l) Request the dataset download (DSDL) using the download links (DL) from the at least one data provider (DP1-DP3) by the data consumer device (DC),
m) Provide the requested datasets using the download (DL),
n) Process the service (PS) using the datasets provided in step m) as the sovereign datasets by a processing device and operate a connected technical device with the data obtained by the processed service.

3. Method according to one of the previous claims, wherein the contracts is a set of contracts, comprising at least two contracts.

4. Method according to one of the previous claims, wherein the consolidate the contracts as a super-contract (SC), referring to the contracts, is performed by grouping contracts according to their contractual terms.

5. System for processing a service that acquires multiple sovereign datasets and operating a technical device with the datasets obtained thereby, comprising a consumer device (DC), a contract proxy device (CP), at least one data provider (DP1-DP3) and a registry (REG), wherein the steps of the method according to one of the preceding claims is executed.

6. System according to the previous claim, wherein the contract proxy device (CP) comprises a registry explorer module (REGEX), a contract aggregator module (CA), a contract consolidator module (CC), a contract negotiator module (CN) and a download link dispatcher module (DLD), wherein following steps are executed:
S1) the registry explorer module (REGEX) is configured to search the registry (REG) using predefined search criteria and to retrieve data related to a respective data provider and related to a respective dataset, and
S2) the contract aggregator module (CA) is configured to contact a data provider and to aggregate contracts by grouping contracts according to their contractual terms, like terms of contracts, and
S3) the contract consolidator module (CC) is configured to consolidate/to merge contracts to a super-contract (SC), and
S4) the contract negotiator module (CN) is configured to approve the super-contract (SC) with the data consumer (DC), and
S5) the download link dispatcher module (DLD) is configured to create a list of download links (DL) regarding datasets.

7. Computer program product, comprising instructions which, when the program is executed by a computer, cause it to carry out the method/steps of the method according to one of the preceding claims.

8. Storage medium, comprising the computer program product according to the preceding claim.
